# EUROPEAN PATENT APPLICATION

(11) **EP 4 181 348 A1**
(43) Date of publication of application: **17.05.2023**
(21) Application number: 22206617.7
(22) Date of filing: 10.11.2022
(51) Int. Cl.: H02J 7/00

(54) **BATTERY CHARGER CONFIGURED TO CHANGE CHARGING ALGORITHM ACCORDING TO AN OPTIMIZED CONFIGURATION**

(30) Priority: 10.11.2021 US 202163277905 P; 27.10.2022 US 202217974688
(71) Applicant: Powermat Technologies Ltd., 4970602 Petach Tikva (IL)
(72) Inventor: SHERMAN, Itay, 4970602 Petach Tikva (IL)
(74) Representative: Maiwald GmbH

(57) **Abstract**

A charger is provided. The charger includes a controller and an input/output module. The controller includes a memory storing a charging algorithm. The controller is configured to control a current flow to and from a battery according to the charging algorithm, collect information from the battery during charge and discharge cycles relative to the current flow, report the information to a server, and change the charging algorithm according to an optimized configuration. The input/output module is configured to connect the controller and the server and communicate the information.

## Description

### CROSS REFERENCE TO RELATED APPLICATIONS

This application claims priority from U.S. Provisional Patent Application No. 63/277,905, entitled "GREEN BATERY INVENTION," filed on November 10, 2021, which is hereby incorporated by reference as if set forth in full in this application for all purposes.

### BACKGROUND

Conventional consumer and industrial devices released to market are using batteries for power operation. In some case, rechargeable batteries are used. Batteries are being charged multiple times during a life span of a device and of the battery. In many cases, a battery life span is shorter than a typical life span of the device itself, and battery replacement is required.

There are several battery technologies. The battery life span is not fixed and is usually measured in charge cycles. Typical maximal charge cycles a battery can be around 500 cycles. The exact number depends on many factors, with operation and storage temperatures and charge currents being the most dominant factors. Also, the capacity of a battery typically degrades over time and is influenced by multiple factors, including those mentioned above.

Additionally, there are also occasions of catastrophic failures of the battery that may result in fire or explosion. As an example, a main process includes the phenomena of "thermal rundown" were a battery temperature rises to high temperatures in short time and causes complete failure of a cell. This phenomena may be triggered by mechanical failure of the battery (e.g., rapture of case and insolation) or electrical failure due to overcharging and voltages. To achieve a maximal capacity from a battery, while also maintaining longest life span, as well as good user experience during charging, analysis of a specific battery cell is required. At present, conventional technologies are limited with respect to an ability of analysis.

In some cases, for mass volume products (such as leading mobile handset models), design companies invest significant resources in optimizing charging algorithms and policies to get the best operations out of the battery. Yet, smaller companies or products that do not have such large volumes tend to use standard charging circuit and algorithms that represent a basic compromise on charging and operation parameters that would satisfy most conditions, but are not optimized to the battery or usage. Further, the investment required to get full characterization is usually high and is not justified for smaller companies or volumes.

Thus, there is a need to provide a system that allows for optimization of the charging cycle and batteries extending the battery life span, maximizing battery capacity, reducing a risk for catastrophic failure, and providing early warning for battery failure events.

### SUMMARY

According to one or more embodiments, a charger is provided. The charger includes a controller and an input/output module. The controller includes a memory storing a charging algorithm. The controller is configured to control a current flow to and from a battery according to the charging algorithm, collect information from the battery during charge and discharge cycles relative to the current flow, report the information to a server, and change the charging algorithm according to an optimized configuration. The input/output module is configured to connect the controller and the server and communicate the information. According to one or more embodiments, the charger can be implemented in a method, a system, a computer program product, or an apparatus. According to one embodiment, a system is provided comprising any of the chargers disclosed herein and comprises any of the servers described herein.

Additional features and advantages are realized through the techniques of the present disclosure. Other embodiments and aspects of the disclosure are described in detail herein. For a better understanding of the disclosure with the advantages and the features, refer to the description and to the drawings.

### BRIEF DESCRIPTION OF THE DRAWINGS

The subject matter is particularly pointed out and distinctly claimed in the claims at the conclusion of the specification. The forgoing and other features, and advantages of the embodiments herein are apparent from the following detailed description taken in conjunction with the accompanying drawings in which:
FIG. 1 depicts a system in accordance with one or more embodiments;
FIG. 2 depicts a system in accordance with one or more embodiments;
FIG. 3 depicts a method in accordance with one or more embodiments; and
FIG. 4 depicts a method in accordance with one or more embodiments.

### DETAILED DESCRIPTION

Embodiments disclosed herein may include apparatuses, systems, methods, and/or computer program products for a green battery charger and framework. According to one or more embodiments, the green battery charger and framework provides a system that allows for optimization of the charging cycle and batteries extending the life span of the battery, maximizes its capacity, and reduces the risk for catastrophic failure and provides early warning for battery failure events. By way of example, the green battery charger and framework collects information from the battery during charge and discharge cycles and changes the charging algorithm according to an optimized configuration (which can be based on the collected information).

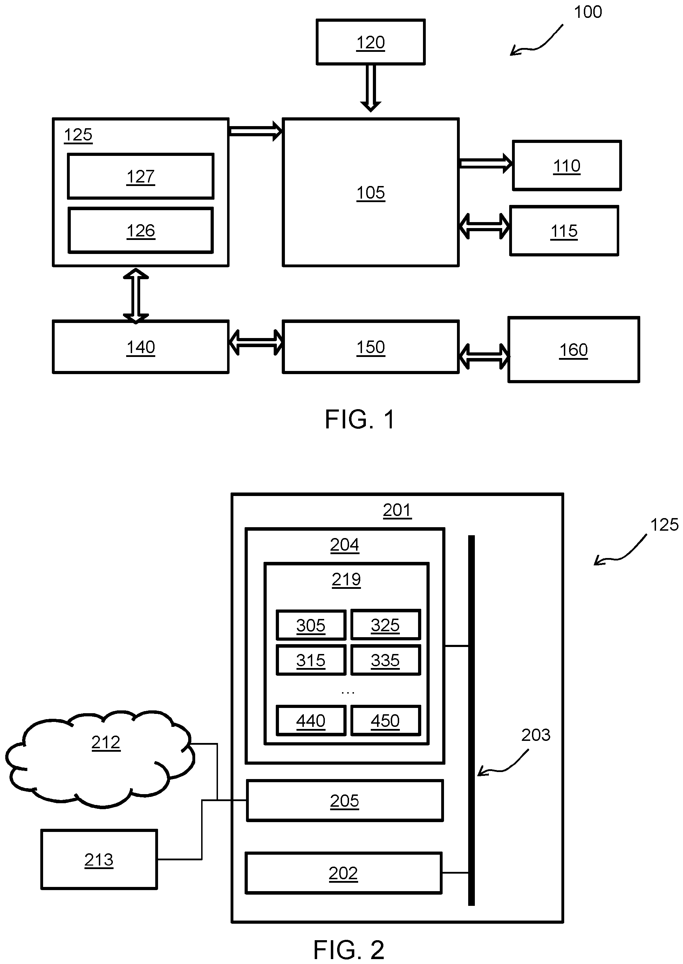

FIG. 1 shows a system 100 (e.g., the green battery charger and framework) in accordance with one or more embodiments. The system 100 comprises a control circuit 105 (e.g., for charging and discharging), a load 110, a battery 115, a power source 120, and a controller 125 (i.e., a charger). The controller 125 includes at least one input/output (I/O) module 126 (e.g., a communications adapter) and firmware 127 (e.g., configurable battery charger software or firmware). The firmware 127 can also include one or more charging algorithms and/or one or more charge policies. Charge policies can be a set of values and conditions, as well as rules, for how and when to perform charge and discharge operations and are herein referred to as configurations. The system 100 further includes a host 140 (e.g., a host with an internet connection), a server 150 (e.g., a cloud server), and a user interface (Ul) 160 (e.g., a vendor Ul). Note that anyone of the elements of the system 100 can communicate or report operations to other elements of the system 100, such as in support of generating optimized configurations.

The control circuit 105 (e.g., for charging and discharging) includes wireless power circuitry to enable inductive power transfer (e.g., a wireless charging transmitter/receiver). In this way, the control circuit 105 can inductively provide and receive power through one or more coils as well as manage the inductive power in accordance with operations of the controller 125. For example, by aligning of magnetic coils (e.g., wireless power and shortrange data coils) between the control circuit 105 and the battery 115, wireless data and power transfers may occur as directed by the firmware 127. Note the control circuit 105 can report operations, on behalf of itself, the load 110, the battery 115, and the power source, to the server 150.

The load 110 or device load can be an electrical component or circuit that consumes electric power provided by the control circuit 110. Examples of the load 110 include, but are not limited to, battery requiring charging, lights, and motors.

The battery 115 includes a device for storing of electric power. The battery 115 can include one or more electrochemical cells with external connections (e.g., magnetic coils) for powering electrical devices. The battery can charge or discharge electrical power from or to the control circuit 105 as directed by the firmware 127.

The power source 120 can be an electrical component or circuit that provides electric power to the control circuit 110. The power source 120 for charging may be at or above wireless charging transmitter/receiver of the control circuit 105, a fixed voltage power source, or other variable voltage sources such as PV cells. Examples of the power source 120 include but are not limited to, power station or outlet, battery, and generator.

The controller 125 can be a battery charger, green battery charger, and/or a fully configurable battery charger. Note the controller 125 can report operations, on behalf of itself, the control circuit 105, the load 110, the battery 115, and the power source, to the server 150. Note that the controller 125 can include one or more sensors, such as a temperature sensor.

The controller 125 can include circuitry enabling control of a charge current to the battery 115 and optionally out of the battery 115 to the load 110. The controlling of the charge current can occur in accordance with one or more charging algorithms. According to one or more embodiments, the circuitry of the controller 125 can include two field-effect transistors (FETs) connected back to back and enabling for complete isolation of the battery 115 from a charge circuit. According to one or more embodiments, the circuitry of the controller 125 can include a battery management system integrated circuit (BMS IC) that can be connected to the battery 115 via a serial link, such as I2C. The BMS IC can be accessed and controlled by the controller 125 running battery charger code, as implemented in the firmware 127. The BMS IC may be used for battery monitoring (e.g., voltage, current, etc.) or to control access to the battery 115 (e/.g., controlling the FETs of BMS).

According to one or more embodiments, the controller 125 utilizes the firmware 127 to implement a configurable battery charging. In this way, the firmware 127 leverages the I/O module 126 (and as assisted by the control circuit 105) to control a current flow to the battery 115. The controller 125 and firmware 127 collect information from the battery 115 during charge and discharge cycles, including currents, voltages, temperatures, internal resistance estimations, etc.

The I/O module 126 establishes, implements, and manages a connection between the controller 125 and the server 150. The I/O module 126 serves as a bridge between the controller 125 and the server 150 (e.g., operations can be communicated there between). By way of example, the I/O module 126 can interface to any internet protocol (IP) connection via WiFi, cellular, or other technology (e.g., the Internet) that provides access to the server 150. For instance, the I/O module 126 interfaces to any IP connection technology on one side and to the charger 125 on the other. According to one or more embodiments, the I/O module 126 can be a software component that interfaces with the firmware 127 and interfaces to a universal asynchronous receiver-transmitter ("UART" or other computer hardware device for asynchronous serial communication in which the data format and transmission speeds are configurable) that is physically interfaced with the host 140 that has a WiFi or cellular connection (utilizes a WiFi or cellular network) to the Internet. The I/O module 126 encapsulates data from the charger 125 into IP packets and transfers the IP packets over the UART to the server 150. The I/O module 126 also receives IP packets over the UART, which are then decapsulated and transferred to the charger 125. According to one or more embodiments, the I/O module 126 interfaces directly to a communication unit, such as Bluetooth low energy (BLE) or WiFi, that is embedded on the controller 125 or directly interfaced thereto.

Turning to FIG. 2, the controller 125 is depicted as a device 201 in accordance with one or more embodiments. The device 201 can also be representative of the control circuit 105, the host 140, the server 150, as well as any other device, that includes one or more central processing units (CPU(s)), which are collectively or generically referred to as processor(s) 202. The processors 202, also referred to as processing circuits, are coupled via a system bus 203 to system memory 204 and various other components. The system memory 204 may include a read only memory (ROM), a random access memory (RAM), internal or external Flash memory, embedded static-RAM (SRAM), and/or any other volatile or non-volatile memory. For example, the ROM is coupled to the system bus and may include a basic input/output system (BIOS), which controls certain basic functions of the device 201, and the RAM is read-write memory coupled to the system bus 203 for use by the processors 202.

FIG. 2 further depicts an adapter 205 coupled to the system bus 203. According to one or more embodiments, the adapter 205 can be module to interface to the host 140 via serial bus (e.g., such as RS-232 , USB or other connection). The adapter 205 may be a small computer system interface (SCSI) adapter that communicates with a drive and/or any other similar component. The adapter 205 may be representative of a communications adapter that interconnects the system bus 203 with a network 212, which may be an outside network (power or otherwise), enabling the device 201 to communicate data and/or transfer power with other such devices (e.g., such as the server 150). A display 213 (e.g., screen, a display monitor) can be connected to the system bus 203 by the adapter 205, which may include a graphics controller to improve the performance of graphics intensive applications and a video controller. The display 212, for example, can provide the user interface 160. Additional input/output devices can be connected to the system bus 203 via the adapter 205, such as a mouse, a touch screen, a keypad, a camera, a speaker, etc.

In one embodiment, the adapter 205 may be connected to one or more I/O buses that are connected to the system bus 203 via an intermediate bus bridge. Suitable I/O buses for connecting peripheral devices such as hard disk controllers, network adapters, and graphics adapters typically include common protocols, such as the Peripheral Component Interconnect (PCI).

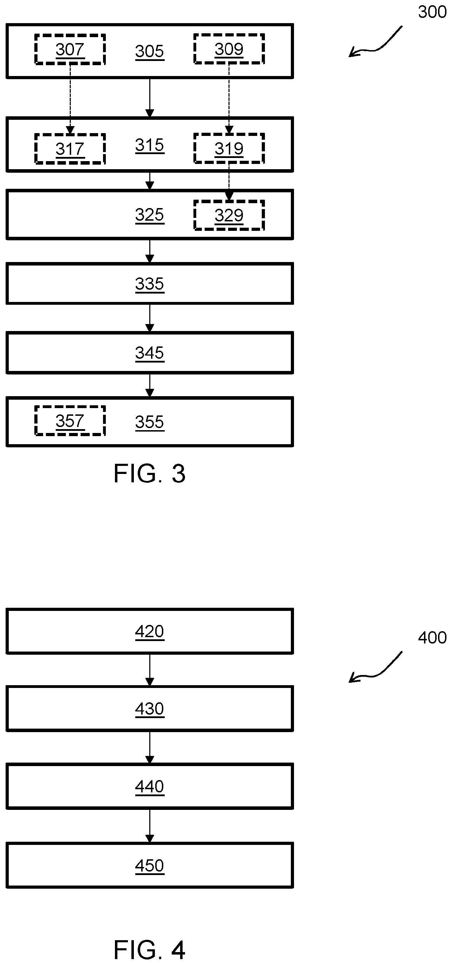

The system memory 204 is an example of a computer readable storage medium, where software 219 (e.g., the firmware 127 of FIG. 1) can be stored as instructions for execution by the processor 202 to cause the device 201 to control a current flow to the battery 115, to collect information from the battery 115, and to operate, such as is described herein with reference to FIGS. 3-4. In connection with FIG. 3, the software 219 can be representative of firmware, such that the system memory 204 and the processor 202 (e.g., of the controller 125) logically provide operations 305, 315, 325, 335, etc.

Returning back to FIG. 1 and according to one or more embodiments, the controller 125 can include configuration options that enable one or more charging algorithms. A charging algorithm is a framework options or fields that accept values and conditions from a configuration and that cause the controller 125 to operate the charge and discharge cycles according to those values and conditions. An example of the one or more charging algorithms includes, but is not limited to, a constant current / constant voltage algorithm. Any configuration of the server 125 can be downloadable from the server 125 via the I/O module 126 to the controller 125.

The controller 125 can be pre-loaded with a default configuration that matches a basic profile of the load 110 and the battery 115 (e.g., when a charger is shipped in a product). Profiles, generally, are operational settings for a device/battery/condition defined by users or customers. The default configuration can be a set of values and conditions for how the controller 125 operates that match generic operational settings for a basic profile. The default configuration can be over written by the server 150 during operation, such as with an optimized configuration. The optimized configuration can be a set of values and conditions for how the controller 125 operates that match operational settings particular to a specific profile. Any configuration can include all relevant parameters to a particular charging algorithm. Parameters of the one or more charging algorithms can be configured via the default configuration and/or the optimized configuration. An example of parameters includes, but is not limited to, constant current threshold, constant voltage threshold, maximal charge duration (e.g., overall and/or per phase), minimal battery resistance allowed for charging and operation, maximal battery resistance allowed for charging and operation, slope of current increase, slope of voltage increase, slope of current and voltage increase, over voltage threshold, over current threshold, temperature threshold, temperature threshold for charge halt, temperature threshold for charge resumption, schedule for charging (e.g., specific hours, days, time ranges, intervals etc..), specific profiles for specific schedules, support for multiple profiles, switching profile rules (e.g., based on time of day and/or activity), and additional charging phases (e.g., a Pre-Charge and/or a trickle charger and the respective voltage and current threshold).

The host 140 (e.g., a host with an internet connection) can be any virtualization service that provides access to one or more cloud servers (e.g., the server 150) hosted or split across physical servers and virtual machines.

The server 150 can be implemented as a physical computer connected to the Internet or as a cloud server hosted over a cloud service. The server 150 can receive and store data (reported operations within the system 100), such as from all of connected chargers 125. The server 150 can analyze received data to extract information. Examples of this information include, but are not limited to, information per battery type across all devices that use a specific battery type or technology utilizes, a (typical) maximal capacity to charge cycles curve for each of the battery types connected, information with dependency on temperature or charging speed, information on battery ageing, information curves for internal resistance vs. charge cycles or estimation of maximal charge cycles, and information on battery failures, as well as statistical connections information to logged parameters of the battery 115 that have reported failures (e.g., such as the internal resistance or resistance change rate, temperatures etc. before failure occurred).

The server 150 may also analyze per user information, such as (typical) usage information. For example, user information can include (typical) intervals of no activity with the device vs. charge connection and a distribution over time (e.g., day or week) or connection to location information such, as ambient temperature. The server 150 may also analyze per user information, such as (typical) discharge profiles, speed of discharge, duration of sessions, etc. The user information can be processed (e.g., with ML/AI assistance as described herein) to extract alert indications for pending battery failures, as well as optimized charge algorithm parameters or optimized configurations. Note that optimized charge algorithm can be directed towards providing a best balance between battery capacity and longevity verses power availability to the user based on overall and user specific usage profiles.

The server 150 may also analyze per device information, such as analyzing battery behavior across different sets of devices with same or similar batteries with respect to different test configurations. The server 150 can then generate and monitor reports with respect to the device information to determine which one of the configurations provide better and/or best results and to determine trends (e.g., with respect to sensitivity of capacity, lifespan to charge rate, temperature, etc.). The server 150 can, in view of device information (as well as any other information collected), generate optimized configurations for devices and/or users. Note that the server 150 can utilize additional external information that is not part of the device information from the chargers to generate optimized configurations. The additional external information may include, but is not limited to, detailed manufacturer specifications of batteries, specific product information, model and battery type, external reports on battery failures, battery data analytics, additional information that may impact usage (e.g., such as the sun set and sun rise), weather information, etc.

The UI 160 can be any means by which one or more user interact (e.g., provide input and receive output) with the system 100. The UI 160 (e.g., a vendor Ul) can provide device original equipment manufacturer (OEM) and possibly users with access to the server 150 stored data and processed insights, as well as alerts on individual battery health.

FIG. 3 depicts a method in accordance with one or more embodiments. The method 300 can be implemented by the system 100, where one or more portions of the method 300 can be embodied by the server 150 (as well as the firmware 127 and executed by the controller 125). Generally, the method 300 is an implementation of green battery charger and framework. According to one or more embodiments, operations of the method 300 can be performed in multiple flows, branches of flows, or in parallel (i.e., serial execution is not required) to address different user or customer needs. For example, the user or customer can be end users, original equipment manufacturers (OEMs) of existing devices, or engineers designing new devices). The system 100 provides the technical effects, benefits, and advantages of implementing the method to address the different user or customer needs.

The method 300 begins when, at block 305, the server 150 receives data or reported operations within the system 100. In support of the server 150 receiving the data or reported operations, the controller 125 collects information from the battery 115 during charge and discharge cycles. This information is then provided to the server 150.

As shown, a set of sub blocks illustrate addresses a need of OEM engineers, such that long term statistics can be used for optimal selection of batteries for new designs based on historical data for products of similar type. As an example, the server 150 logs reports (at subblock 307) from a plurality of batteries (e.g., 1000) of similar type. The plurality of batteries can be installed across one or more different products. The reports can be logged over a time period, such as one or more months, or further over years. The reports may include the collected information by the controller 125.

As shown, another set of sub-blocks addresses a need of individual users, such that charging profiles consider individual user profiles. According to one or more embodiments, the server 150 can collect information (at subblock 309). For instance, the server 150 can collect information from existing similar devices in a category of house cleaning robots to determine a number of true working hours during a time period (e.g., one or more months or further over years). Further, the server 150 can collect information from existing similar devices in a category of house cleaning robots to determine a required battery capacity to satisfy requirements for different charge cycles, as well as discharge rates that fulfil required cleaning conditions.

At block 315, the server 150 analyzes the data or reported operations. The server 150 can compare the data and the reported operations to the basic profile and the default configurations of the batter 115.

As an example (at subblock 317), the server 150, by analyzing capacity vs. charge rate (e.g., in some cases with ML/AI assistance as described herein), determines that charging at rate of 1C as performed on some of the one or more different products is causing battery capacity to degrade in a pace that is three 3 times faster vs. the 0.2C charging rate performed on other products. For example, the server 150 determines that, for three years, an average daily operation time is four hours per day with twenty hours of docking. A battery capacity (i.e., 960wH battery) can be selected to allow for eight hours of operation to accommodate an expected tolerance of operation time (i.e., four hours per day). A charging rate can be determined for normal conditions at 0.25C and for cases where battery goes below a threshold (i.e., selected from 30% to 70% charge) at 0.5C. Given a profile of a number of expected full charge discharge cycles over three years, the server can determine a number of cycles to be 500, and a list of batteries from different manufacturers that match these parameters are provided (as recommendations as seen in block 355).

According to one or more embodiments (at subblock 319), for a specific user, the analysis by the server 150 determines that 95% of days the specific user had a device connected to charging between 8:00 PM to 6:00 AM and that 25% of the days the specific user had the device connected for one hour between 12:00 PM to 3:00 PM when battery capacity was low.

At block 325, the server 150 generates optimized configurations. The optimized configurations can set parameters of a charging algorithm on a per user or per device basis. According to one or more embodiments (at subblock 329), regarding the specific user, the server 150 generates an optimal charging plan (e.g., optimized configurations) that includes a charging rate of 0.2C between 8:00 PM to 6:00 AM and charging rate of 0.5C between 12:00 PM to 3:00 PM. In turn, the optimal charging plan can optimize battery life and capacity, while maintaining a high availability of power to the specific user.

At block 335, the server 150 communicates the optimized configurations to the system 100. The server 150 can communicate via the at least one I/O module 126. In turn, locally, the per battery/user charging parameters are set within the control circuit 105, the load 110, the battery 115, and/or the controller 125. The elements of the system 100 use the optimized configurations (e.g., the battery/user charging parameters) for optimized operation.

At block 345, the server 150 communicates updates. In this regard, the server 150 can communicate changes in the battery/user charging parameters to the elements of the system 100. The updates can be communicated by the server 150 on a periodic basis, when changes occur, etc.

At block 355, the server 150 communicates reports and/or warnings. In this regard, the server 150 can, report warning, issues, status, and the like via the UI 160 based on defined charge policies (i.e., set of rules for how and when to perform charge and discharge operations). Note that warnings can be generated in the controller 125 based on the provided configurations (e.g., such as 'an internal resistance passing a threshold' or 'temperature rise of battery is not corelated to actual external or charge current') and be reported to the server 150. According to one or more embodiments (at subblock 357), the server 150 may also provide via the UI 160 recommendations, such as to a vendor in relation to the batteries the device should use (e.g., by comparing behavior and performance, stated specification parameters, and other similar batteries that are monitored by the system 100).

According to one or more embodiments, an OEM can utilize the UI 160 to retrieve information on devices with batteries completing corresponding life span, with batteries having capacities degraded below a defined threshold, and with batteries that have had failures that have halted devices operations. The OEM can use this information to offer battery replacements. The OEM can further observe and/or derive battery statistics, such as overall capacity curves over charging cycles, temperatures and charging rates, latest recommended charging configurations, etc. The OEM can implement new default charger configurations based on this information as part of new device releases.

By way of example, the server 150 can use the collected information to offer the OEMs with information to assist in new designs, by providing recommendation on battery size and technology. The server 150 can match usage/device/user profiles to the new designs and compare or extrapolate the collected information from actual operating devices with similar characteristics. As another example, an OEM can design a new house cleaning robot with an engine power of120W when operating at full power and 60W on low power cleaning. The OEM can also design the new house cleaning robot based on an expected 95% battery life span of three years.

FIG. 4 depicts a method in accordance with one or more embodiments. The method 400 can be implemented by the system 100, where portions of the method 400 can be embodied by the firmware 127 and executed by the controller 125 (as well as the server 150). Generally, the method 400 is an implementation of green battery charger and framework.

The method 400 begins when, at block 420, the controller 125 utilizes the control circuit 105 to charge the battery 115 or provide power to the load 110. The control circuit 105 can provide wireless power using magnetic induction.

At block 430, the controller 125 controls an amount of current or voltage for charging by providing control messages via the wireless power link to a wireless power transmitter/receiver of the control circuit 105. According to one or more embodiments, control over the charging current or voltage is performed by controlling FETs on an output to the battery 115 by toggling the FETs in different frequency and duty cycles to achieve control over charge current and voltage.

At block 440, the controller 125 monitors the control circuit 105, the load 110, and the battery 115. Monitoring can include, but is not limited to monitoring multiple system power operations, voltages and currents going in and out of the battery 115 (e.g., during charge and discharge), dynamic estimations of an internal resistance of the battery 115, temperatures during a charge cycle, temperatures during a discharge cycle, temperatures during no activity, gradients of temperature between multiple sensors, change rates relative to or estimated from temperature changes, temperature information distinguishing between ambient temperature increase and battery internal heat, temperature information distinguishing between charging circuitry or load created heat, and user power interactions (e.g., switching on and off of a device, setting of power modes such as fast charging, etc.).

At block 450, the controller 125 monitored parameters are logged and reported to the server 150. According to one or more embodiments, the reporting can be based on a push approach, such as at every defined time interval, or based on polling from the server 150. The parameters that are logged and reported can be used in generating optimized configurations as described herein.

According to one or more embodiments, a charger is provided. The charger includes a controller and an input/output module. The controller includes a memory storing a charging algorithm. The controller is configured to control a current flow to and from a battery according to the charging algorithm, collect information from the battery during charge and discharge cycles relative to the current flow, report the information to a server, and change the charging algorithm according to an optimized configuration. The input/output module is configured to connect the controller and the server and communicate the information.

According to one or more embodiments or any of the charger embodiments herein, the information can include one or more of currents, voltages, temperatures, and internal resistance estimations.

According to one or more embodiments or any of the charger embodiments herein, the controller can be configured to control a charge current out of the battery to a load according to the charging algorithm.

According to one or more embodiments or any of the charger embodiments herein, the charging algorithm can be a framework options or fields that accept values and conditions from the optimized configuration and that cause the controller to operate the charge and discharge cycles according to the values and the conditions.

According to one or more embodiments or any of the charger embodiments herein, the optimized configuration can include a set of values and conditions particular to a specific profile for operating the charge and discharge cycles.

According to one or more embodiments or any of the charger embodiments herein, the memory can store a default configuration that provides values and conditions to the charging algorithm.

According to one or more embodiments or any of the charger embodiments herein, the server can be connected to a plurality of battery chargers including the charger.

According to one or more embodiments or any of the charger embodiments herein, the server can receive charge and discharge cycle information from each of the plurality of battery chargers.

According to one or more embodiments or any of the charger embodiments herein, the input/output module can interface via an internet protocol connection through a WiFi network or a cellular network to provide access to the server.

According to one or more embodiments or any of the charger embodiments herein, the controller can receive the optimized configuration from the server through the input/output module.

According to one or more embodiments, a method is provided. The method is implemented by a charger executing a charging algorithm stored on a memory of the charger. The method includes controlling, by a controller of the charger, a current flow to and from a battery; collecting, by the controller, information from the battery during charge and discharge cycles relative to the current flow; reporting, by the controller through an input/output module of the charger, the information to a server; and changing, by the controller, the charging algorithm according to an optimized configuration.

According to one or more embodiments or any of the method embodiments herein, the information can include one or more of currents, voltages, temperatures, and internal resistance estimations.

According to one or more embodiments or any of the method embodiments herein, the controller can be configured to control a charge current out of the battery to a load according to the charging algorithm.

According to one or more embodiments or any of the method embodiments herein, the charging algorithm can be a framework options or fields that accept values and conditions from the optimized configuration and that cause the controller to operate the charge and discharge cycles according to the values and the conditions.

According to one or more embodiments or any of the method embodiments herein, the optimized configuration can include a set of values and conditions particular to a specific profile for operating the charge and discharge cycles.

According to one or more embodiments or any of the method embodiments herein, the memory can store a default configuration that provides values and conditions to the charging algorithm.

According to one or more embodiments or any of the method embodiments herein, the server can be connected to a plurality of battery chargers including the charger.

According to one or more embodiments or any of the method embodiments herein, the server can receive charge and discharge cycle information from each of the plurality of battery chargers.

According to one or more embodiments or any of the method embodiments herein, the input/output module can interface via an internet protocol connection through a WiFi network or a cellular network to provide access to the server.

According to one or more embodiments or any of the method embodiments herein, the controller can receive the optimized configuration from the server through the input/output module.

As indicated herein, embodiments disclosed herein may include apparatuses, systems, methods, and/or computer program products at any possible technical detail level of integration. The computer program product may include a computer readable storage medium (or media) having computer readable program instructions thereon for causing a controller to carry out aspects of the present invention.

The computer readable storage medium can be a tangible device that can retain and store computer readable program instructions. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

The computer readable program instructions described herein can be communicated and/or downloaded to respective controllers from an apparatus, device, computer, or external storage via a connection, for example, in-band communication. Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

The flowchart and block diagrams in the drawings illustrate the architecture, functionality, and operation of possible implementations of apparatuses, systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the flowchart and block diagrams in the drawings. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used herein, specify the presence of stated features, integers, steps, operations, elements, and/or components, but do not preclude the presence or addition of one more other features, integers, steps, operations, element components, and/or groups thereof.

The descriptions of the various embodiments herein have been presented for purposes of illustration, but are not intended to be exhaustive or limited to the embodiments disclosed. Many modifications and variations will be apparent to those of ordinary skill in the art without departing from the scope and spirit of the described embodiments. The terminology used herein was chosen to best explain the principles of the embodiments, the practical application or technical improvement over technologies found in the marketplace, or to enable others of ordinary skill in the art to understand the embodiments disclosed herein.

## Claims

1. A charger comprising:
a controller comprising a memory storing a charging algorithm, the controller being configured to:
control a current flow to and from a battery according to the charging algorithm,
collect information from the battery during charge and discharge cycles relative to the current flow,
reporting the information to a server through an input/output module of the charger, and
change the charging algorithm according to an optimized configuration; and
the input/output module configured to connect the controller and the server and communicate the information.

2. The charger of claim 1, wherein the information comprises one or more of currents, voltages, temperatures, and internal resistance estimations.

3. The charger of claim 1 or 2, wherein the controller is configured to control a charge current out of the battery to a load according to the charging algorithm.

4. The charger of any of the preceding claims, wherein the charging algorithm comprise a framework options or fields that accept values and conditions from the optimized configuration and that cause the controller to operate the charge and discharge cycles according to the values and the conditions.

5. The charger of any of the preceding claims, wherein the optimized configuration comprises a set of values and conditions particular to a specific profile for operating the charge and discharge cycles.

6. The charger of any of the preceding claims, wherein the memory stores a default configuration that provides values and conditions to the charging algorithm.

7. The charger of any of the preceding claims, wherein the server is connected to a plurality of battery chargers including the charger.

8. The charger of claim 7, wherein the server receives charge and discharge cycle information from each of the plurality of battery chargers.

9. The charger of any of the preceding claims, wherein the input/output module interfaces via an internet protocol connection through a WiFi network or a cellular network to provide access to the server.

10. The charger of any of the preceding claims, wherein the controller receives the optimized configuration from the server through the input/output module.

11. A method implemented by a charger executing a charging algorithm stored on a memory of the charger, the method comprising:
controlling, by a controller of the charger, a current flow to and from a battery according to the charging algorithm;
collecting, by the controller, information from the battery during charge and discharge cycles relative to the current flow;
reporting, by the controller through an input/output module of the charger, the information to a server; and
changing, by the controller, the charging algorithm according to an optimized configuration.

12. The method of claim 11, wherein the information comprises one or more of currents, voltages, temperatures, and internal resistance estimations.

13. The method of claim 11 or 12, wherein the controller is configured to control a charge current out of the battery to a load according to the charging algorithm.

14. The method of any of claims 11 to 13, wherein the charging algorithm comprise a framework options or fields that accept values and conditions from the optimized configuration and that cause the controller to operate the charge and discharge cycles according to the values and the conditions.

15. The method of any of claims 11 to 14, wherein the optimized configuration comprises a set of values and conditions particular to a specific profile for operating the charge and discharge cycles.

16. The method of any of claims 11 to 15, wherein the memory stores a default configuration that provides values and conditions to the charging algorithm.

17. The method of any of claims 11 to 16, wherein the server is connected to a plurality of battery chargers including the charger.

18. The method of claim 17, wherein the server receives charge and discharge cycle information from each of the plurality of battery chargers.

19. The method of any of claims 11 to 18, wherein the input/output module interfaces via an internet protocol connection through a WiFi network or a cellular network to provide access to the server.

20. The method of any of claims 11 to 19, wherein the controller receives the optimized configuration from the server through the input/output module.
